Europäisches Patentamt

European Patent Office

Office européen des brevets

(19)

(11) Numéro de publication : **0 614 288 A1**

(12) # DEMANDE DE BREVET EUROPEEN

(21) Numéro de dépôt : **94400469.6**

(22) Date de dépôt : **04.03.94**

(51) Int. Cl.⁵ : **H04B 7/005**

(30) Priorité : **05.03.93 FR 9302589**

(43) Date de publication de la demande :
**07.09.94 Bulletin 94/36**

(84) Etats contractants désignés :
**DE FR GB**

(71) Demandeur : **THOMSON-CSF**
**173, Boulevard Haussmann**
**F-75008 Paris (FR)**

(72) Inventeur : **Terre, Michel**
**THOMSON-CSF,**
**SCPI**
**B.P. 329**
**F-92402 Courbevoie Cedex (FR)**
Inventeur : **Viroulaud, Christophe**
**THOMSON-CSF,**
**SCPI**
**B.P. 329**
**F-92402 Courbevoie Cedex (FR)**

(74) Mandataire : **Lincot, Georges et al**
**THOMSON-CSF,**
**SCPI,**
**B.P. 329,**
**50, rue Jean-Pierre Timbaud**
**F-92402 Courbevoie Cédex (FR)**

(54) **Procédé et dispositif d'égalisation d'un signal radio mettant en oeuvre un algorithme des moindres carrés rapides.**

(57)   Le procédé consiste à approcher un signal échantillonné $X_n$, par un filtre numérique (1) qui est adapté (2) pour rendre minimal un signal d'erreur.
   Il consiste à rechercher une matrice carrée unitaire qui appliquée directement à la matrice $X_N(n)$ des échantillons $X_n$ transforme cette dernière en une matrice $R_N(n)$ triangulaire.
   Les applications vont à la réalisation de postes récepteurs de radio-communication.

FIG.1

EP 0 614 288 A1

La présente invention concerne un procédé d'égalisation d'un signal radioélectrique et un dispositif égaliseur pour modem de radiocommunication.

Elle s'applique notamment à la réalisation de postes récepteurs de radiocommunication.

Une chaîne radio standard de radiocommunication comporte classiquement des étages de transposition de fréquences, couplés à un étage de décomposition sous une forme complexe du signal avec une partie réelle et une partie imaginaire, en voies I et Q. Avant d'être démodulé, le signal traverse un étage d'égalisation pour lutter contre le phénomène d'interférence inter symboles.

L'égalisation consiste à décorréler chaque symbole complexe reçu des symboles reçus précédemment. Elle est généralement réalisée par l'intermédiaire de filtres adaptatifs placés à la sortie des voies I et Q.

Parmi les algorithmes mis en oeuvre dans les égaliseurs, les algorithmes connus sous la désignation "d'algorithme des moindres carrés rapides" basés sur la décomposition triangulaire dite QR de la matrice du signal d'entrée peuvent être utilisés pour l'égalisation de signaux monodimensionnels.

Un tel algorithme est par exemple décrit dans l'article de MM. G. Bellanger et Philipp A. Regalia ayant pour titre "The FLS-QR algorithm for adaptive filtering : The case of multichannel signals" de Signal Processing 1991, vol. 22 pages 115-126.

Cet algorithme consiste à rechercher une matrice carrée unitaire $Q_N(n)$ qui, appliquée directement à la matrice $X_N(n)$ des échantillons du signal transforme cette dernière en une matrice $R_N(n)$ triangulaire et une matrice nulle. L'avantage de ce traitement est qu'il permet d'obtenir directement les coefficients du filtre de prédiction de l'égaliseur par la résolution d'un système triangulaire à N équations, en rendant minimal la norme du produit $Q_N(n).\varepsilon n$, $\varepsilon n$ étant l'erreur de prédiction.

L'élaboration du système triangulaire d'équations a lieu en appliquant sur chaque échantillon de l'erreur de prédiction présent à un instant n, un ensemble déterminé de rotations, dont la mise à jour qui est réalisée de façon séquentielle est particulièrement bien adaptée pour des réalisations comportant des processeurs de traitement du signal programmés en langage C ou directement en assembleur.

Cependant pour des réalisations câblées à base de filtres en treillis par exemple, cet algorithme rend très difficile le traitement du flux continu des données du fait qu'il faut procéder dans l'une des branches du treillis à des mises à jour des matrices de rotation dans l'ordre croissant des itérations et dans l'autre branche à des mises à jour des matrices de rotation dans leur ordre décroissant. Dans ces conditions, ce type de réalisation devient fortement sous optimale, et présente un handicap difficile à surmonter pour des transmissions de données rapides.

Un autre inconvénient résulte du fait que l'algorithme n'est pas directement transposable au traitement de signaux complexes, car il est très difficile de lever les ambiguïtés de phase qui résultent des extractions de racine carré effectuées sur l'énergie du signal de prédiction.

Le but de l'invention est de pallier les inconvénients précités.

A cet effet l'invention a pour objet un procédé d'égalisation d'un signal radioélectrique du type consistant à approcher un signal échantillonné $X_n$, par filtrage à travers un filtre numérique qui est adapté au cours du temps pour rendre minimal un signal d'erreur $\varepsilon(n)$, la minimisation a lieu par mise à jour des coefficients d'une première matrice de rotation $Q_a(n)$ donnant une prédiction des échantillons $X_q(n+1)$ et du signal d'erreur $e_{aq}(n+1)$ et d'une deuxième matrice de mise à jour des rotations $Q_\alpha(n+1)$ (5) telle que

$$\begin{bmatrix} g_{N+1}(n+1) \\ G_N(n+1) \end{bmatrix} = Q_\alpha(n+1) \begin{bmatrix} G_N(n) \\ u \end{bmatrix}$$

où u est un scalaire fonction de l'énergie $E_a(n+1)$ du signal d'erreur, $g_{N+1}(n+1)$ est un scalaire et $G_N(n)$ est un vecteur résultant du produit de la matrice $Q_N(n)$ par le vecteur [100 ... 0] transposé tel que
$$Q_N(n).[10...0]^T = [\gamma_N(n)...G_N(n)]^T, \gamma_N(n)$$
étant un scalaire

caractérisé en ce qu'il consiste à normaliser les échantillons du signal d'entrée par la racine carrée de son énergie $\sqrt{E_{bo}(n+1)}$ en introduisant une rotation d'angle $\psi$ telle que :

$$\begin{bmatrix} 0 \\ \sqrt{E_{bo}(n+1)} \end{bmatrix} = \begin{bmatrix} \cos\psi(n+1) & -\sin\psi(n+1) \\ \sin\psi(n+1) & \cos\psi(n+1) \end{bmatrix} \begin{bmatrix} X(n+1) \\ \sqrt{wE_{bo}(n)} \end{bmatrix},$$

2

avec $\sin(\psi + 1) = \dfrac{x(n + 1)}{\sqrt{E_a(n + 1)}}$

$$E_a(n + 1) = \cos^2 \psi(n + 1)E_a(n) + e_{aq}{}^2(n + 1)$$

et

$$\gamma(n)\sqrt{\frac{\cos^2 \psi(n + 1)E_a(n)}{E_a(n + 1)}} = \gamma(n + 1)$$

- à calculer $e_{aq}(n + 1)$ et $X_q(n + 1)$ par la relation

$$\begin{bmatrix} e_{aq}(n+1) \\ X_q(n+1) \end{bmatrix} = Q_a(n) \begin{bmatrix} \sin \psi(n+1) \\ \cos \psi(n+1). X_q(n) \end{bmatrix}$$

et à calculer $Q_a(n + 1)$ par la relation

$$Q_a(n + 1).[1.0]^T = [\gamma_N(n + 1), G_N(n + 1)]^T.$$

Elle a également pour objet un dispositif égaliseur pour la mise en oeuvre du procédé et son utilisation dans un modem de radiocommunication pour décorréler des symboles complexes.

D'autres caractéristiques et avantages de l'invention apparaîtront à l'aide de la description qui suit faite en regard des figures annexées qui représentent :

- La figure 1 un schéma de principe d'un filtre égaliseur adaptatif selon l'art antérieur.
- La figure 2 une structure de matrice de rotation $\hat{Q}_n$.
- Les figures 3A et 3B les étapes principales d'un algorithme MCRQR de l'art antérieur mis sous la forme d'un organigramme.
- La figure 4 un mode de réalisation d'une structure de calcul adaptée au déroulement des étapes de l'algorithme des figures 3A et 3B.
- La figure 5 une structure d'opérateur de rotation.
- Les figures 6A et 6B les étapes principales d'un algorithme MCRQR systolique selon l'invention.
- La figure 7 une structure de circuit systolique pour l'exécution de l'algorithme des figures 6A et 6B.
- La figure 8 un mode de réalisation de la structure systolique de la figure 7 à l'aide d'opérateur CORDIC.
- La figure 9 un mode de programmation de l'algorithme en utilisant uniquement des opérations réalisables par une cellule CORDIC.
- La figure 10 une structure de récepteur radio muni d'un égaliseur selon l'invention.
- La figure 11 un mode de réalisation d'un égaliseur selon l'invention applicable au récepteur de la figure 7.

Le procédé selon l'invention est basé sur la décomposition dite "QR" de la matrice de données composant le signal à égaliser telle que définie dans l'article de MM. Bellanger et A. Regalia précité.

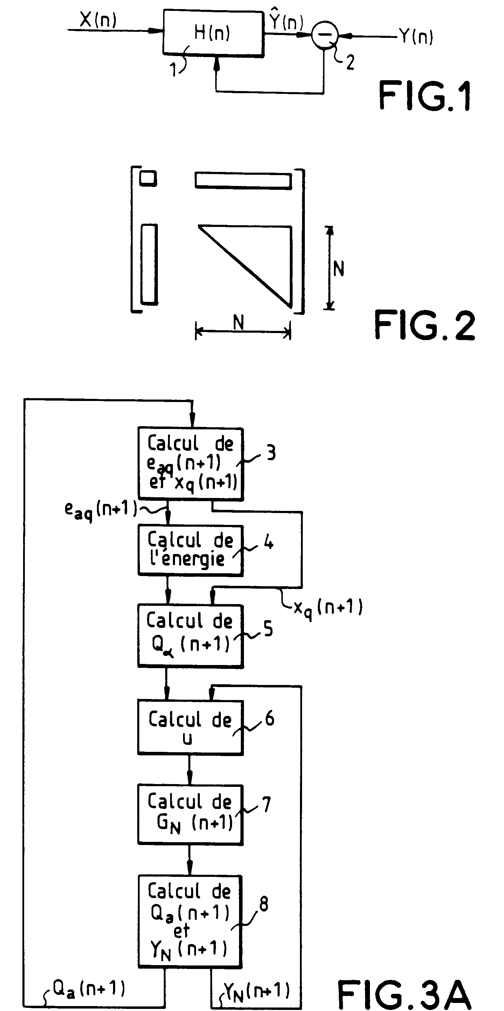

Selon le schéma de principe d'un égaliseur à filtre adaptatif qui est représenté à la figure 1, le procédé mis en oeuvre dans une décomposition QR consiste à approcher un signal échantillonné de référence Y(n) à partir d'un signal échantillonné X(n) à égaliser, par filtrage à travers un filtre numérique 1 de fonction de transfert H(n) dont les coefficients sont adaptés au cours du temps pour rendre minimal un signal d'erreur $\varepsilon_n$. Sur la figure 1 le signal $\varepsilon_n$ est obtenu à la sortie d'un circuit soustracteur 2 qui soustrait chaque échantillon de signal $\hat{y}(n)$ d'un échantillon correspondant yn du signal de référence. Le signal d'erreur $\varepsilon_n$ obtenu est utilisé pour ajuster les coefficients du filtre numérique 1 pour rendre l'erreur $\varepsilon_n$ minimale.

En considérant le cas d'un filtre à réponse impulsionnelle finie de N coefficients. l'erreur $\varepsilon_n$ est définie par la relation

$$\varepsilon(n) = y(n) - \sum_{i=0}^{N-1} h_i(n). x(n-i) \quad (1)$$

Dans la relation (1) $h_i(n)$ représente un des N coefficients du filtre 1.

Selon le principe de la décomposition QR le filtre 1 est représenté par la matrice $H_N(n)$ égale à la matrice transposée de ses coefficients définie comme suit

$$H_N(n) = [h_0(n), h_1(n)...h_{N-1}(n)]^T \quad (2)$$

et qui rend minimale l'erreur quadratique moyenne (EQM) obtenue pondérée par un facteur d'oubli w suivant la relation

$$H_N(n) \,/\, \min E\!\left[\varepsilon^2(n)\right] = \sum_{i=0}^{N} w^i \varepsilon^2(n-i) \quad (3)$$

En notation matricielle (1) s'écrit encore :

$$[\varepsilon n] = [Y(n)] - [X_N(n)] \cdot [H_N(n)] \quad (4)$$

avec

$$[\varepsilon n] = \left[\varepsilon(n),\, w^{1/2}\varepsilon((n-1)\ldots,\, w^{n/2}\varepsilon_0\right]^T \quad (5)$$

$$[Y(n)] = [y(n), w^{1/2}y(n-1)\ldots, w^{n/2}y(0)]^T \quad (6)$$

et

$$[X_N(n)] = \begin{bmatrix} xn & x(n-1) & \ldots & x(n-N+1) \\ w^{1/2}x(n-1) & w^{1/2}x((n-2) & \ldots & w^{1/2}x(n-N) \\ w^{\frac{n-1}{2}}x(1) & w^{\frac{n-1}{2}}x(0) & & 0 \\ w^{n/2}x(0) & 0 & & \end{bmatrix} \quad (7)$$

Les coefficients du filtre H(n) sont ajustés pour rendre minimale la norme du vecteur $\varepsilon(n)$ dont les composantes sont constitués par les coefficients du vecteur $[\varepsilon n]$ (5).

Le procédé consiste à rechercher une matrice carrée unitaire $Q_N(n)(n+1)x(n+1)$ de n+1 lignes et n+1 colonnes qui lorsqu'elle est appliquée directement à une matrice $X_N(n)$ des échantillons du signal composé de n+1 lignes et N colonnes, transforme celle-ci en une matrice $R_N(n)$ triangulaire de N lignes et N colonnes et une matrice nulle.

Ceci permet d'obtenir une représentation de la matrice $H_N(n)$ des coefficients du filtre 1 par la résolution d'un système triangulaire à N équations, en rendant minimale la norme du produit $Q_N(n)\varepsilon(n)$, ce qui est équivalent à rendre minimale la norme de $\varepsilon(n)$ car la matrice $Q_N(n)$ est unitaire.

Différents choix sont possibles pour la matrice $R_N(n)$ et chacun peut conduire à un mode de réalisation particulier. Cependant il apparaît préférable de baser les calculs sur une prédiction arrière qui amène à un développement des calculs assurément beaucoup plus simplifié.

Dans cette approche, la matrice $R_N(n)$ est choisie triangulaire inférieure de façon à mettre le produit matriciel $[Q_N(n)][\varepsilon n]$ sous la forme :

$$[Q_n][\varepsilon n] = \lfloor Q_N(n)\rfloor[Yn] - \left|\,^0 R_N(n)\right| \lfloor H_N(n)\rfloor \quad (8)$$

Dans l'opération de minimisation le vecteur $H_N(n)$ optimal est obtenu lorsque les N dernières composantes du vecteur $Q_N(n)\varepsilon(n)$ sont nulles et rendent minimale la norme de ce dernier.

La matrice $[H_N(n)]$ optimale désignée par HoptN(n) est alors définie par la relation matricielle

$$\begin{bmatrix} \varepsilon q_n(n) \\ \vdots \\ \varepsilon q_N(n) \\ 0 \end{bmatrix} = \begin{bmatrix} \varepsilon q_n(n) \\ \vdots \\ \varepsilon q_N(n) \\ Yq_N(n) \end{bmatrix} - \begin{bmatrix} 0 \\ \\ R_N(n) \end{bmatrix} \cdot \begin{bmatrix} h_0 opt(n) \\ h_1 opt(n) \\ \vdots \\ h_{N-1} opt(n) \end{bmatrix} = \varepsilon q(n) \quad (9)$$

Pour permettre de calculer par itération la matrice $Q_N(n+1)$ à partir de la matrice $Q_N$ et y(n+1) avec un coût de calcul proportionnel à N, un premier partitionnement est effectué pour calculer $Q_{N+1}(n)$ en fonction de $Q_N(n)$ et un deuxième partitionnement est effectué pour calculer $Q_{N+1}(n+1)$ en fonction de $Q_N(n)$.

En considérant selon le premier partitionnement que $X_N(n)$ peut être obtenue en fonction de $X_N(n-1)$ par la relation :

$$X_N(n) = \begin{bmatrix} xn & x(n-1) & \ldots & x(n-N+1) \\ \begin{bmatrix} & w^{1/2} & X_N(n-1) & \end{bmatrix} \end{bmatrix} \quad (10)$$

ceci permet de constater que le produit

$$\begin{bmatrix} 1 & 0 \\ 0 & Q_N(n-1) \end{bmatrix} \begin{bmatrix} & X_N(n) \end{bmatrix} = \begin{bmatrix} xn & x(n-1) & \ldots & x(n-N+1) \\ & 0_{w^{1/2}R_N(n-1)} \end{bmatrix} \quad (11)$$

peut être simplifié par un ensemble de N rotations $Q\theta_i(n)$ avec

$$Q\theta_i(n) = \begin{bmatrix} \cos\theta_i(n) & -\sin\theta_i(n) \\ \sin\theta_i(n) & \cos\theta_i(n) \end{bmatrix} \quad (12)$$

qui font descendre les coefficients $xn$,

$$x((n-1),$$

..., $x(n - N + 1)$ de la première ligne de la matrice du 2ème membre de l'équation (11) sur sa partie triangulaire inférieure $w^{1/2}R_N(n - 1)$.

Le produit des rotations $Q\theta_i(n)$ donne une matrice $\hat{Q}_N(n)$ telle que

$$\hat{Q}_N(n) \bullet \begin{bmatrix} 1 & 0 \\ 1 & Q_N(n-1) \end{bmatrix} = Q_N(n) \quad (13)$$

D'après les relations (8) et (9) $H_N(n)$ optimal vérifie la relation

$$[\varepsilon_q n(n) \ldots \varepsilon_q N(n), Y_q(n)]^T = [Q_N(n)] \cdot [Y(n)] \quad (14)$$

ce qui est encore égal d'après la relation (13) à

$$\hat{Q}_N(n) \bullet \begin{bmatrix} 1 & 0 \\ 0 & Q_N(n-1) \end{bmatrix} \begin{bmatrix} y(n) \\ w^{1/2}[Y_Q(n-1)] \end{bmatrix} \quad (15)$$

En éliminant dans (15) les lignes et les colonnes qui n'ont que des zéros et des uns dans la matrice $\hat{Q}_N(n)$, la relation (14) qui représente l'équation du filtrage devient,

$$\begin{bmatrix} \varepsilon qn(n) \\ \vdots \\ Yq(n) \end{bmatrix} = Qa(n) \begin{bmatrix} yn \\ \sqrt{w}[Yq(n-1)] \end{bmatrix} \quad (16)$$

Dans ce qui précède $\hat{Q}_N(n)$ a la structure représentée à la figure 2. Elle permet notamment d'exprimer $\hat{Q}_N(n)$ en fonction d'un scalaire $\gamma_N(n)$ et d'un vecteur $G_N(n)$ tel que

$$Q_N(n)[1, 00\ldots 0]^T = [\gamma_N(n)0.0G_N(n)]^T \quad (17)$$

En posant

$$G_{N+1}(n) = \begin{bmatrix} g_{N+1}(n) \\ G_N(n) \end{bmatrix} \quad (18)$$

et

$$\gamma_{N+1}(n) = \gamma_N(n)\cos\theta_{N+1}(n) \quad (19)$$

les relations (18) et (19) permettent d'établir la relation entre $Q_{N+1}(n)$ et $Q_N(n)$ recherchée.

Le deuxième partitionnement consiste à considérer l'équation de filtrage (16) comme une équation de prédiction en remplaçant $y_{(n)}$ par x(n+1) et $Yq(n+1)$ par $Xq(n+1)$
ce qui donne la relation

$$\begin{bmatrix} e_a q(n+1) \\ Xq(n+1) \end{bmatrix} = Q_a(n) \begin{bmatrix} x(n+1) \\ \sqrt{w}X_q(n) \end{bmatrix} \quad (20)$$

En considérant un partitionnement donnant $X_{N+1}(n)$ en fonction de $X_N(n-1)$ tel que :

$$\begin{bmatrix} Q_N(n-1) & & 0 \\ & & \\ & 0 & \\ 0 & 0 & 1 \end{bmatrix} \underbrace{\begin{bmatrix} x(n) \\ w^{1/2}x(n) \\ X_N((n-1) \\ \\ w^{n/2}x(0) \quad 0\,0 \quad 0 \end{bmatrix}}_{X_{N+1}(n)} = \begin{bmatrix} e_{aq}(n) \\ e_{aq(N+1)}(n) & 0 \\ Xq(n) \\ & R_N(n-1) \\ w^{n/2}x(0) \quad 0\,0 \quad 0 \end{bmatrix} \quad (21)$$

Il existe alors un produit de rotations $Q_{ea}(n)$ qui fait descendre le vecteur :

$$[e_{aqn}(n)e_{aq(n-1)}(n),...,e_{aq(N+1)}(n)]^T$$

sur le dernier terme de la colonne et un produit $Q\alpha(n)$ de rotations qui fait descendre le vecteur Xq(n) sur ce dernier terme tel que :

$$Q\alpha(n) = \begin{bmatrix} 1 & 0 & 0 & 0 \\ 0 & 1 & 0 & 0 \\ 0 & 0 & \cos\alpha_1(n) & -\sin\alpha_1(n) \\ 0 & 0 & \sin\alpha_1(n) & \cos\alpha_1(n) \end{bmatrix} \cdots \begin{bmatrix} \cos\alpha_N(n) & 0 & 0 & -\sin\alpha_N(n) \\ 0 & 1 & 0 & 0 \\ 0 & 0 & 1 & 0 \\ \sin\alpha_N(n) & 0 & 0 & \cos\alpha_N(n) \end{bmatrix} \quad (22)$$

L'ensemble de ces rotations peut être symbolisé par

$$\begin{bmatrix} I_{n-N} & 0 \\ 0 & Q_\alpha(n) \end{bmatrix} Q_{ea}(n) \begin{bmatrix} Q_N((n-1) & 0 \\ 0 & 1 \end{bmatrix} = Q_{N+1}(n) \quad (23)$$

En multipliant chacun des membres de la relation (23) par le vecteur $[1,0,0,...,0]^T$ et en utilisant les résultats mis à jour lors du premier partitionnement, il vient :

$$\begin{bmatrix} I_{n-N} & 0 \\ & \\ 0 & Q_{\alpha}(n) \end{bmatrix} Q_{ea}(n) \begin{bmatrix} Q_N(n-1) & 0 \\ & \\ 0 & 1 \end{bmatrix} \begin{bmatrix} 1 \\ 0 \\ \vdots \\ 0 \end{bmatrix} = Q_{N+1}(n) \begin{bmatrix} 1 \\ 0 \\ \vdots \\ 0 \end{bmatrix} \quad (24)$$

soit

$$\begin{bmatrix} I_{n-N} & 0 \\ & \\ 0 & Q_{\alpha}(n) \end{bmatrix} Q_{ea}(n) \begin{bmatrix} \gamma N(n-1) \\ \vdots \\ G_{N(n-1)} \\ 0 \end{bmatrix} = \begin{bmatrix} I_{n-N} & 0 \\ & \\ 0 & Q_{\alpha}(n) \end{bmatrix} \begin{bmatrix} \gamma N+1(n) \\ \vdots \\ G_{N(n-1)} \\ u \end{bmatrix} = \begin{bmatrix} \gamma N+1(n) \\ 0 \\ \vdots \\ G_{N+1}(n) \end{bmatrix} = \begin{bmatrix} \gamma N+1(n) \\ 0 \\ \vdots \\ gN+1(n) \\ G_N(n) \end{bmatrix} \quad (25)$$

La dernière rotation de $Q_{ea}(n)$ est telle que :

$$\begin{bmatrix} \cos\varphi & \cdots & -\sin\varphi \\ \vdots & \ddots & \vdots \\ \sin\varphi & \cdots & \cos\varphi \end{bmatrix} \begin{bmatrix} eaq_N(n) \\ \vdots \\ \sqrt{wEa_N(n-1)} \end{bmatrix} = \begin{bmatrix} 0 \\ \vdots \\ \sqrt{Ea_N(n)} \end{bmatrix} \quad (26)$$

ce qui donne pour u la valeur :

$$u = \gamma_N(n-1)\frac{eaq_N(n)}{\sqrt{Ea_N(n)}} \quad (27)$$

et l'équation suivante :

$$Q\alpha(n)\begin{bmatrix} G_{N(n-1)} \\ u \end{bmatrix} = \begin{bmatrix} gN+1(n) \\ G_N(n) \end{bmatrix} \quad (28)$$

L'équation (28) permet d'obtenir $G_N(n)$ à partir de $G_N(n-1)$ et la mise à jour de $Q_N(n)$ à partir de $Q_N(n-1)$.

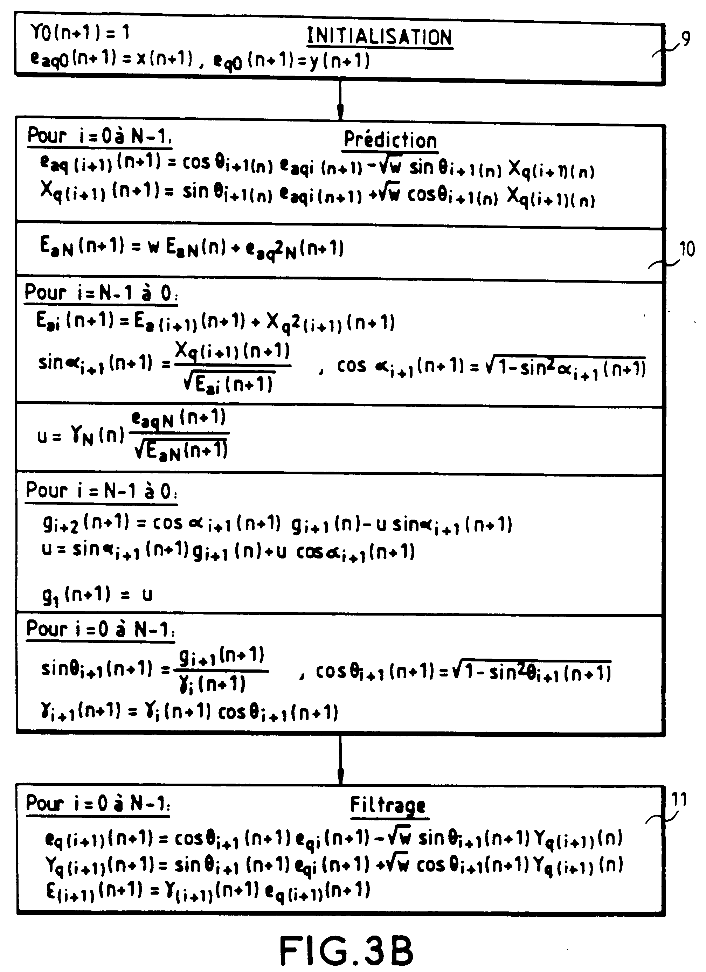

Un algorithme de prédiction permettant d'obtenir ce résultat est représenté aux figures 3A et 3B. Cet algorithme se déroule suivant les étapes 3 à 8 du graphe de la figure 3A. Il consiste à effectuer lors d'une première étape 3 le calcul de la dernière composante $e_{aq}(n+1)$ du vecteur d'erreur a priori modifié par la matrice $Q_a(n+1)$ suivant l'équation de prédiction :

$$\begin{bmatrix} e_{aq}(n+1) \\ X_q(n+1) \end{bmatrix} = Q_a(n)\begin{bmatrix} x(n+1) \\ \sqrt{w}\,X_q(n) \end{bmatrix} \quad (29)$$

Un calcul d'énergie sur les échantillons x(n+1) est effectué à l'étape 4 suivant la relation :

$$E_{aN}(n+1) = w\,E_{aN}(n) + e_{aq}N^2(n+1) \quad (30)$$

A l'étape 5, $Q_{\alpha}(n+1)$ est calculé par la relation

$$\begin{bmatrix} 0 \\ \sqrt{E_{bo}(n+1)} \end{bmatrix} = Q_{\alpha}(n+1)\begin{bmatrix} X_q(n+1) \\ \sqrt{E_aN(n+1)} \end{bmatrix} \quad (31)$$

7

En reportant l'expression de u donnée par la relation (27) dans la relation (28) adaptée à l'instant n+1, $Q_a(n + 1)$ est calculé à l'étape 8 par la relation

$$\begin{bmatrix} \gamma_N(n+1) \\ G_N(n+1) \end{bmatrix} = Q_a(n+1)\begin{bmatrix} 1 \\ 0 \end{bmatrix} \quad (32)$$

Ces calculs s'effectuent comme montré à la figure 3B par itérations successives à partir d'une phase d'initialisation 9 suivie d'une phase de prédiction 10 et d'une phase de filtrage 11.

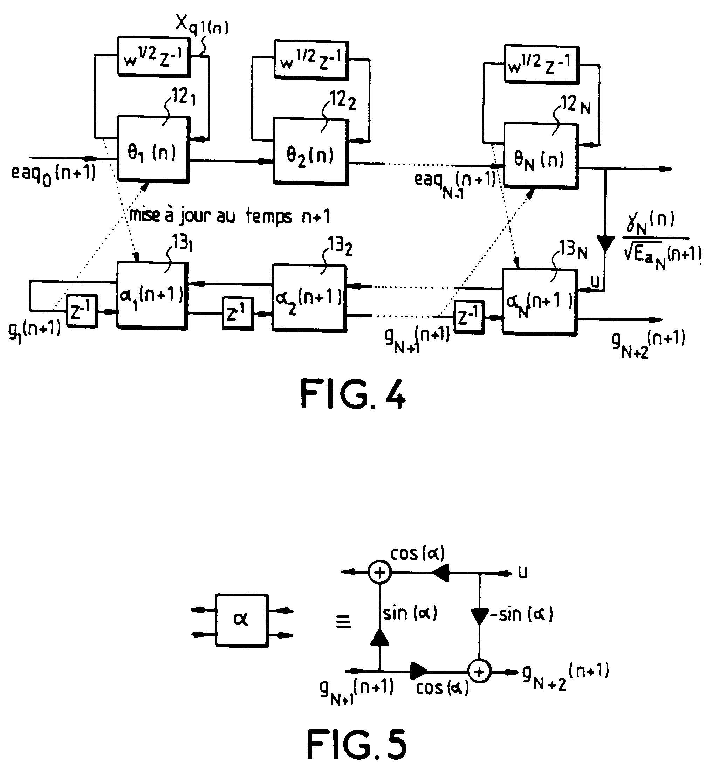

Un mode de réalisation correspondant de la phase de prédiction est représenté à la figure 4. Le prédicteur représenté comporte une voie directe formée de N opérateurs matriciels de rotations $\theta_i(n)$ reliés en série, référencés respectivement $12_1$ à $12_N$ et une voie inversée formée de N opérateurs matriciels de rotation $\alpha_i(n + 1)$ reliés en série référencés respectivement de $13_1$ à $13_N$. Chaque opérateur matriciel $\alpha$ ou $\theta$ est structuré de la façon représentée à la figure 5.

Sur la figure 4 il apparaît que la mise à jour au temps n+1 des rotations $\theta_i(n)$ ne peut avoir lieu qu'après l'obtention des termes $g_i(n + 1)$ qui dépendent eux mêmes de la mise à jour des rotations $\alpha_i(n + 1)$. Ainsi, c'est la rotation d'angle $\alpha_N$ qui est mise à jour en premier. Elle est suivie de la mise à jour de la rotation $\alpha_{N-1}$, puis de $\alpha_{N-2}$ etc. Comme la mise à jour de la rotation $\alpha_N(n + 1)$ ne peut elle-même être réalisée qu'une fois la rotation $\theta_N$ effectuée, il en découle suivant ce schéma que toutes les rotations $\theta_i(n)$ et $\alpha_i(n)$ doivent être effectuées pour tous les ordres avant de pouvoir mettre la rotation $\theta_i(n + 1)$ à jour et commencer l'étape de prédiction de $e_{aq_0}(n + 2)$ à l'instant n+1.

Si l'algorithme est réalisé par un processeur séquentiel traditionnel, cette particularité est sans importance. Par contre, si une implantation directe sur silicium est envisagée, le phénomène décrit précédemment interdit l'alimentation de l'algorithme par un flot de données continues, où le matériel dédié aux rotations d'ordre i pourrait travailler sur des données d'indice t+1 tandis que le matériel dédié aux ordres i+1 travaillerait sur des données d'indice t. En fait l'algorithme qui vient d'être présenté reste applicable à des structures non systoliques, largement sous optimales et qui conduisent au niveau des itérations par deux types d'évaluation de l'indice i allant soit de 0 à N-1 soit de N-1 à 0.

Ce problème est résolu par l'invention en normalisant d'abord les échantillons en entrée par $\sqrt{E_{b\alpha(n+1)}}$, l'équation de mise à jour des rotations $\alpha(n + 1)$ devenant alors :

$$\begin{bmatrix} 0 \\ 1 \end{bmatrix} = Q_\alpha(n+1)\begin{bmatrix} X_q(n+1) \\ \sqrt{E_a(n+1)} \end{bmatrix} \quad (33)$$

$X_q$ et $E_a$ correspondant alors aux données normalisées.

Sa résolution sous forme inverse,

$$Q_\alpha^{-1}(n+1)\begin{bmatrix} 0 \\ 1 \end{bmatrix} = \begin{bmatrix} X_q(n+1) \\ \sqrt{E_a(n+1)} \end{bmatrix} \quad (34),$$

permet de mettre à jour les angles $\alpha_i(n + 1)$ dans le sens des ordres croissants. Il en découle une mise à jour ordonnée croissante des composantes $g_i(n + 1)$ du vecteur $G_N(n + 1)$ à travers la relation :

$$Q_\alpha(n+1)\begin{bmatrix} G_i(n) \\ u_{i+1}(n+1) \end{bmatrix} = \begin{bmatrix} g_{i+1}(n+1) \\ G_i(n+1) \end{bmatrix} \quad (35)$$

avec

$$u_{i+1}(n + 1) = \gamma_{i+1}(n)\frac{e_{aq(i+1)}(n + 1)}{\sqrt{E_{a(i+1)}(n + 1)}}$$

La normalisation d'entrée peut dès lors être formalisée par l'introduction d'une rotation d'angle $\psi$ défini comme suit :

$$\begin{bmatrix} 0 \\ \sqrt{E_{bo}(n+1)} \end{bmatrix} = \begin{bmatrix} \cos\psi(n+1) & -\sin\psi(n+1) \\ \sin\psi(n+1) & \cos\psi(n+1) \end{bmatrix} \begin{bmatrix} x(n+1) \\ \sqrt{wE_{bo}(n)} \end{bmatrix} \quad (36)$$

L'écriture de la conservation de la norme par rotation conduit alors à prendre

$$\sin\psi(n + 1) = \frac{x(n + 1)}{\sqrt{E_{bo}(n + 1)}} \quad (37)$$

Dès lors la normalisation de l'algorithme consiste simplement à remplacer x(n+1) par sin$\psi$(n+1) et $\sqrt{w}$ par cos$\psi$(n+1).

Ce qui conduit d'après la relation (30) aux nouvelles relations :

$$Ea_i(n + 1) = \cos^2\psi(n + 1)Ea_i(n) + e^2_{aqi}(n + 1) \quad (38)$$

et

$$\gamma_i(n)\sqrt{\frac{\cos^2\psi(n + 1)Ea_i(n)}{Ea_i(n + 1)}} = \gamma_{i + 1}(n + 1) \quad (39)$$

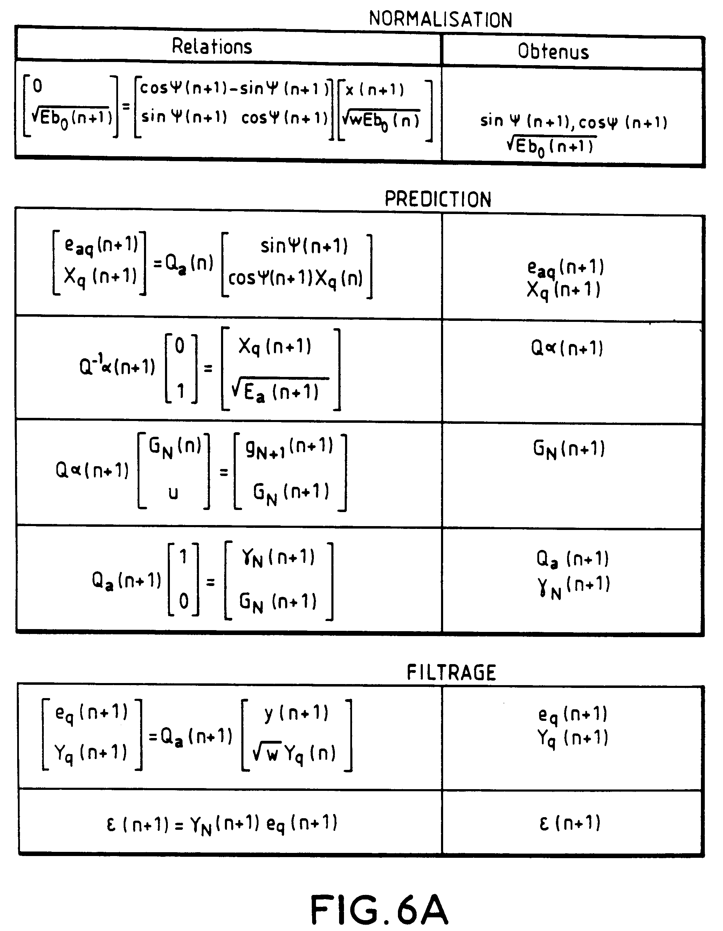

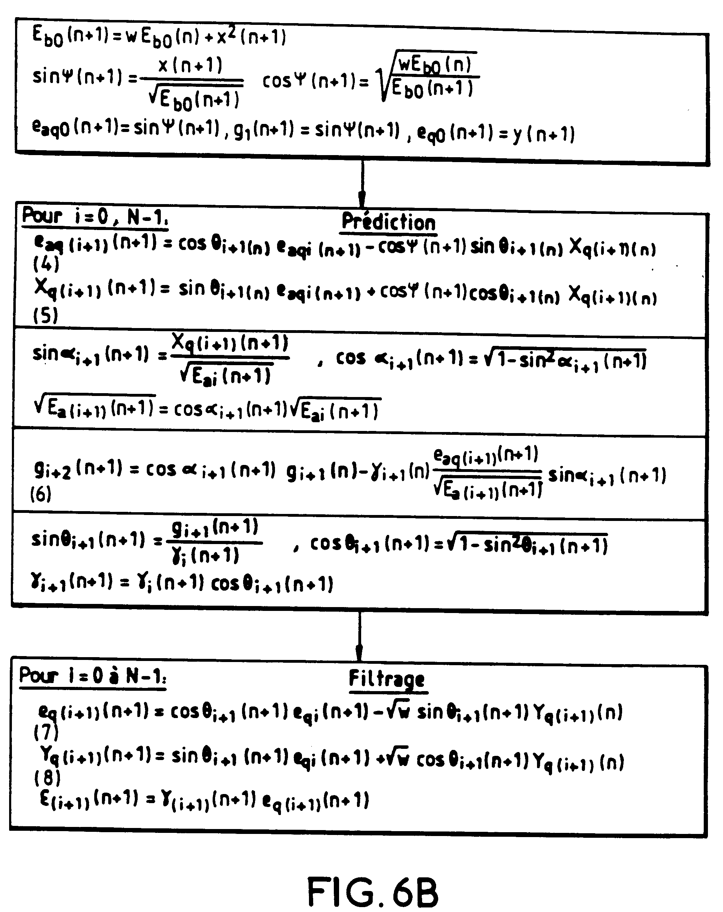

Ceci conduit aux phases d'exécution de l'algorithme représentées à la figure 6A et pour l'exécution des rotations aux itérations de la figure 6B.

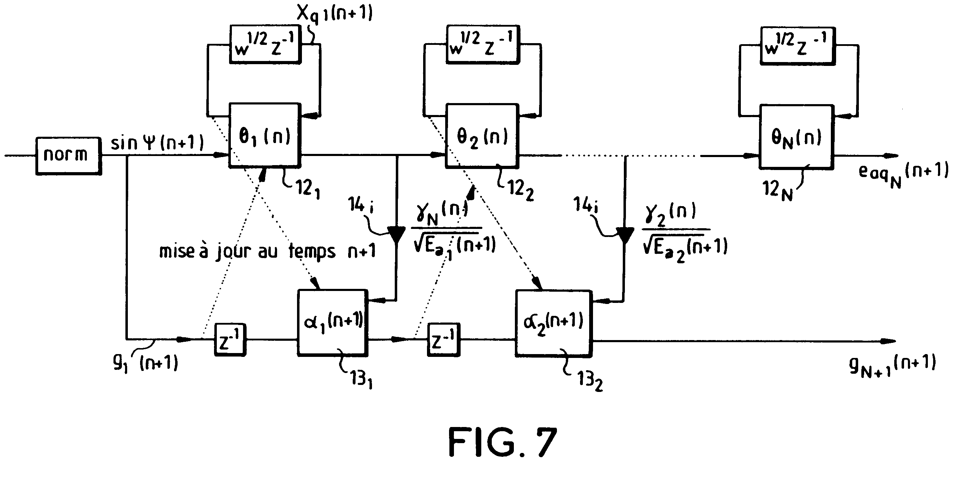

Une structure systolique permettant l'exécution de cet algorithme est montrée à la figure 7. A la différence du mode de représentation de la figure 4 cette structure qui reprend des éléments homologues à ceux de la figure 4 repérés avec les mêmes références comporte pour chaque opérateur matriciel de rotation $\alpha_i(n + 1)$ une entrée de la quantité $u_{i+1}(n + 1)$ représenté par l'équation $\dfrac{\gamma_i(n)}{\sqrt{Ea_1(n + 1)}}$. Chacune des quantités $u_{i+1}(n + 1)$ est calculée par un opérateur $14_i$ qui applique sur chaque signal d'erreur $e_{aq(i+1)}(n + 1)$ fourni par un opérateur de rotation $12_i$.

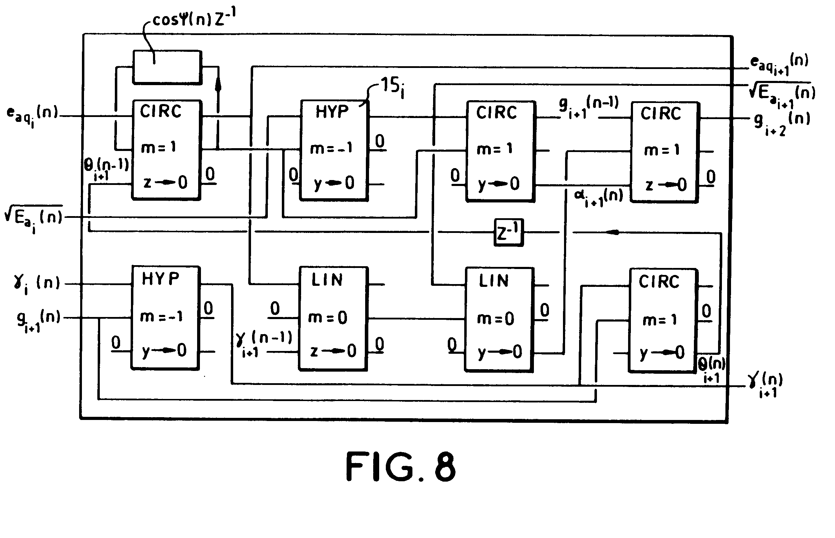

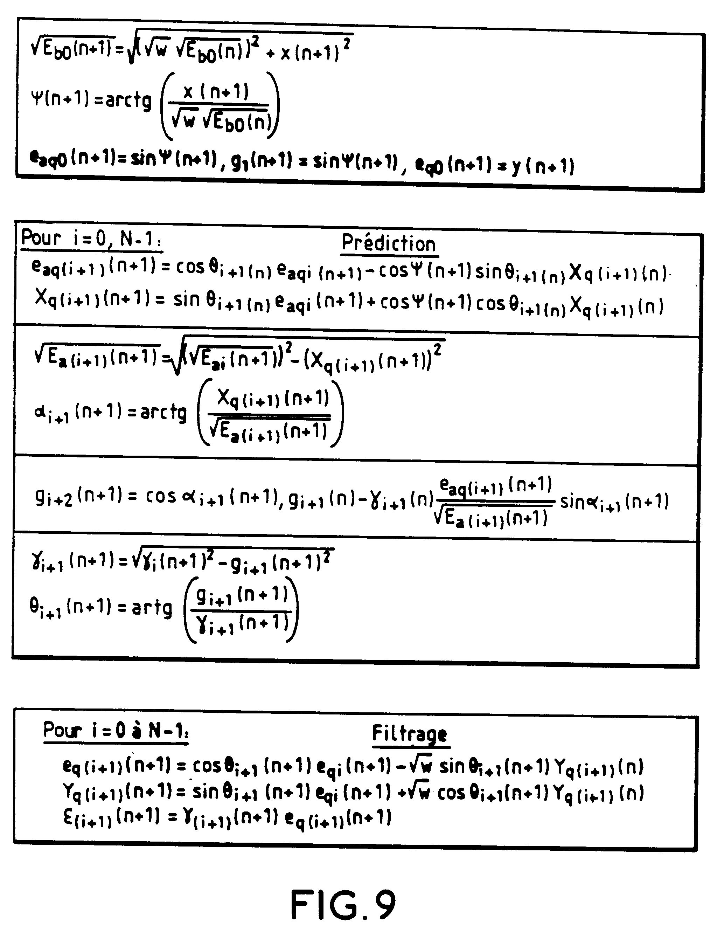

Cela permet aux rotations d'indice i ($\theta_i$ et $\alpha_i$) de traiter chaque donnée d'indice temporel n+1 pendant qu'en parallèle les rotations d'indice i+1 traitent des échantillons du temps n. La structure systolique ainsi obtenue est réalisable de la façon représentée à la figure 8 grâce à l'emploi d'opérateurs CORDIC $15_i$ fonctionnant suivant l'algorithme défini par le tableau de la figure 9, CORDIC étant l'abréviation anglo-saxonne de "Cordinate Rotation Digital Computer".

Pour traiter les nombres complexes les algorithmes précédents doivent être modifiés par l'emploi de matrice de rotations de Givens complexes.

La résolution du problème est obtenu en recherchant une rotation Q telle que :

$$Q\begin{bmatrix} x \\ y \end{bmatrix} = \begin{bmatrix} 0 \\ z \end{bmatrix} \quad (40)$$

La solution à ce problème est obtenue en choisissant pour Q une matrice dite de Givens complexe :

$$Q = \frac{1}{\sqrt{xx^* + yy^x}} \begin{bmatrix} y & -x \\ x^* & y^* \end{bmatrix} \quad (41)$$

qui vérifie l'équation précédente quelques soient x et y complexes. Cette matrice, dont une description peut être trouvée dans l'article IEEE Transactions on Signal Processing, July 91, vol. SP39 n°4, pages 1541-1551 d F. Ling, présente l'avantage de faire apparaître un terme z réel dans l'équation (40), qui correspond dans l'algorithme complexe détaillé ci-après, à une racine d'énergie qui permet de lever les ambiguïtés concernant sa phase. Ceci est obtenu dans l'algorithme en mettant à jour le terme $E_a(n)$ de l'énergie par la relation :

$$Ea_{aN}(n) = w.Ea_{aN}(n - 1) + eaq_N(n)e_{aq_N}^*(n) \quad (42)$$

pour pouvoir utiliser $\sqrt{Ea_N(n)}$ dans les autres relations de l'algorithme.

Il faut noter qu'avec une autre relation de Givens complexe qui n'assurerait pas le caractère réel du terme z de la relation (40) il y aurait ambiguïté de phase.

Le choix de la matrice Q sous la forme de la relation (41) a aussi l'avantage de conduire à une matrice $Q_\alpha$ possédant une diagonale réelle. Ceci conduit à des termes $\gamma$ réels et à une matrice $Q_\alpha$ dont la diagonale principale est aussi réelle.

Dans ces conditions l'algorithme de la figure 3A est modifié comme suit.

L'étape 3 consiste à calculer l'équation de prédiction de l'erreur eaq(n+1) et de

$$X_q((n+1)$$

à partir d'une rotation $Q_a(n)$ de Givens par la relation :

$$\begin{bmatrix} e_{aq}(n+1) \\ X_q(n+1) \end{bmatrix} = Q_a(n) \begin{bmatrix} x((n+1) \\ \sqrt{w}\, X_q(n) \end{bmatrix} \quad (43)$$

A l'étape 4 le calcul de l'énergie $E_{aN}(n + 1)$ est effectué en application de la relation (42).

A l'étape 5 les matrices de rotation $Q_\alpha(n + 1)$ sont calculées de façon à vérifier l'équation (31).

A l'étape 6 le calcul de U par la relation (27) est modifié suivant la relation :

$$u = \gamma_N(n - 1)\frac{e^*_{aqN}(n + 1)}{\sqrt{Ea_N(n + 1)}} \quad (44)$$

Aux étapes 7 et 8, les calculs de $G_N(n + 1)$ et de $Q_a(n + 1)$ par les relations (31) et (32) sont inchangés.

Le développement des rotations conduit aux itérations suivantes en posant :

$$Q_\theta = \begin{bmatrix} c\theta & -s\theta \\ s\theta^* & c\theta \end{bmatrix} \quad avec \quad c\theta^2 + s\theta.s\theta^* = 1, c\theta \in R \ et \ s\theta \in C$$

INITIALISATION

$$\gamma_0(n + 1) = 1$$
$$e_{aq0}(n + 1) = x(n + 1), e_{q0}(n + 1) = y(n + 1)$$

PREDICTION

Pour i = 0 à N-1 :

$$eaq_{i+1}(n+1) = \left(c\theta_{i+1}(n)eaq_i(n+1) - \sqrt{w}s\theta_{i+1}(n)Xq_{i+1}(n)\right)$$

$$Xq_{i+1}(n+1) = \left(s\theta_{i+1}(n)^* eaq_i(n+1) + \sqrt{w}c\theta_{i+1}(n)Xq_{i+1}(n)\right)$$

$$Ea_N(n + 1) = wEa_N(n) + eaq_N(n + 1)eaq_N(n + 1)^*$$

Pour i = N-1 à 0 :

$$Ea_i(n + 1) = Ea_{i+1}(n + 1) + Xq_{i+1}(n + 1)Xq_{i+1}(n + 1)^*$$

$$c\alpha_{i+1}(n + 1) = \frac{\sqrt{Ea_{i+1}(n + 1)}}{\sqrt{Ea_i(n + 1)}}, s\alpha_{i+1}(n + 1) = \frac{Xq_{i+1}(n + 1)}{\sqrt{Ea_i(n + 1)}}$$

$$u = \gamma_N(n)\frac{eaq_N(n + 1)^*}{\sqrt{Ea_N(n + 1)}}$$

Pour i = N-1 à 0 :

$$g_{i+2}(n+1) = \left(c\alpha_{i+1}(n+1)g_{i+1}(n) - s\alpha_{i+1}(n+1)u\right)$$

$$u = \left(s\alpha_{i+1}(n+1)^* g_{i+1}(n) + c\alpha_{i+1}(n+1)u\right)$$

$$g_1(n + 1) = u$$

Pour i = 0 à N-1 :

$$\gamma_{i+1}(n + 1) = \sqrt{\gamma(n + 1)^2 - g_{i+1}(n + 1)g_{i+1}(n + 1)^*}$$

$$c\theta_{i+1}(n + 1) = \frac{\gamma_{i+1}(n + 1)}{\gamma(n + 1)}$$

$$s\theta_{i+1}(n + 1) = \left(\frac{g_{i+1}(n + 1)}{\gamma(n + 1)}\right)^*$$

FILTRAGE

Pour i = 0 à N-1 :

$$eq_{i+1}(n+1) = \left(c\theta_{i+1}(n+1)eq_i(n+1) - \sqrt{ws}\theta_{i+1}(n+1)Yq_{i+1}(n)\right)$$

$$Yq_{i+1}(n+1) = \left(s\theta_{i+1}(n+1)^* eq_i(n+1) + \sqrt{wc}\theta_{i+1}(n+1)Yq_{i+1}(n)\right)$$

$$\varepsilon(n + 1) = \gamma(n + 1)eq(n + 1)$$

Dans ces conditions le passage en complexe de l'algorithme de la figure 6B est immédiat. Son développement conduit aux itérations suivantes :

INITIALISATION/NORMALISATION

$$E_{b0}(n + 1) = wE_{b0}(n) + x(n + 1)x(n + 1)^*$$

$$c\psi(n + 1) = \frac{\sqrt{wE_{b0}(n)}}{\sqrt{E_{b0}(n + 1)}} , \quad s\psi(n + 1) = \frac{x(n + 1)}{\sqrt{E_{b0}(n + 1)}}$$

$$eaq_0(n + 1) = s\psi(n + 1)$$

$$g_1(n + 1) = s\psi(n + 1)^*$$

PREDICTION

Pour i = 0 à N-1 :

$$eaq_{i+1}(n+1) = \left(c\theta_{i+1}(n)eaq_i(n+1) - c\psi(n+1)s\theta_{i+1}(n)Xq_{i+1}(n)\right)$$

$$Xq_{i+1}(n+1) = \left(s\theta_{i+1}(n)^* eaq_i(n+1) + c\psi(n+1)c\theta_{i+1}(n)Xq_{i+1}(n)\right)$$

$$E_{a(i+1)}(n + 1) = E_a(n + 1) - Xq_{i+1}(n + 1)Xq_{i+1}(n + 1)^*$$

$$c\alpha_{i+1}(n + 1) = \frac{\sqrt{Ea_{i+1}(n + 1)}}{\sqrt{Ea(n + 1)}} , \quad s\alpha_{i+1}(n + 1) = \frac{Xq_{i+1}(n + 1)}{\sqrt{Ea_{i+1}(n + 1)}}$$

$$g_{i+2}(n + 1) = c\alpha_{i+1}(n + 1)g_{i+1}(n) - s\alpha_{i+1}(n + 1)\gamma_{i+1}(n)\frac{eaq_{i+1}(n + 1)^*}{\sqrt{Ea_{i+1}(n + 1)}}$$

$$\gamma_{i+1}(n + 1) = \sqrt{\gamma(n + 1)^2 - g_{i+1}(n + 1)g_{i+1}(n + 1)^*}$$

$$c\theta_{i+1}(n + 1) = \frac{\gamma_{i+1}(n + 1)}{\gamma(n + 1)}$$

$$s\theta_{i+1}(n + 1) = \left(\frac{g_{i+1}(n + 1)}{\gamma(n + 1)}\right)^*$$

FILTRAGE

$$eq_{i+1}(n+1) = \left(c\theta_{i+1}(n+1)eq_i(n+1) - \sqrt{ws}\,\theta_{i+1}(n+1)QYq_{i+1}(n)\right)$$

$$Yq_{i+1}(n+1) = \left(s\theta_{i+1}(n+1)^* eq_i(n+1) + \sqrt{wc}\,\theta_{i+1}(n+1)Yq_{i+1}(n)\right)$$

$$\varepsilon(n + 1) = \gamma(n + 1)eq(n + 1)$$

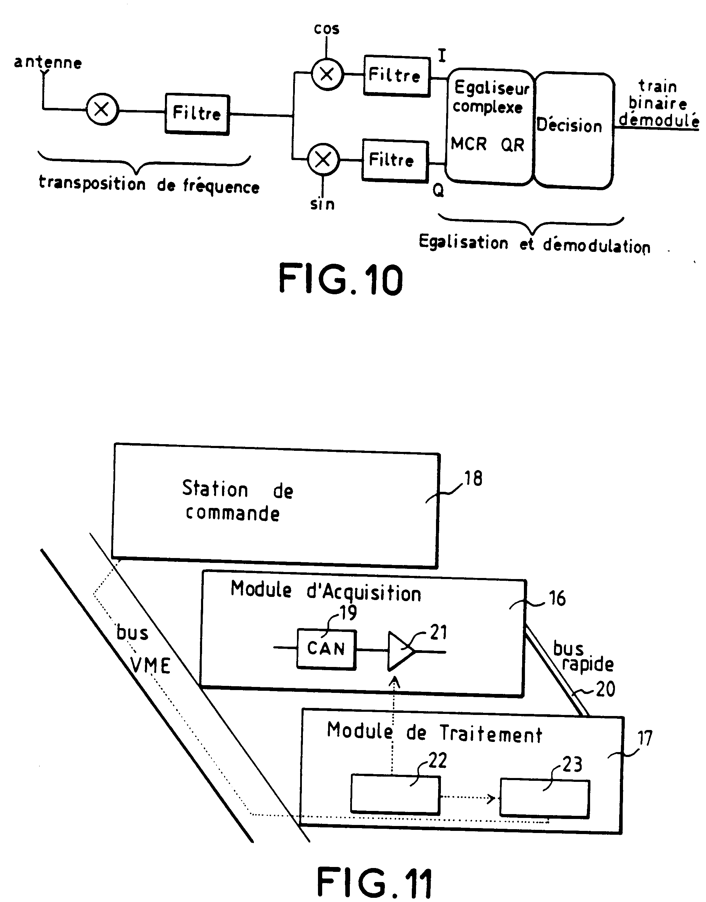

Pour décorréler dans une chaîne de radiocommunication des symboles complexes à l'aide du procédé selon l'invention il est nécessaire de placer le dispositif d'égalisation à la sortie des voies I et Q du récepteur de la façon qui est représentée à la figure 10. Le dispositif d'égalisation pourra être composé de la façon représentée à la figure 11 par deux modules spécifiques 16 et 17 pilotés via un bus normalisé VME par une station de commande 18. Le module 16 assure l'acquisition des signaux démodulés provenant des voies I et Q du récepteur, grâce principalement à deux convertisseurs analogiques-numériques 19 couplés au deuxième module 17 par l'intermédiaire d'un bus rapide 20 et d'atténuateurs variables 21. Typiquement ce premier module peut recevoir un signal radio entre 0 et 500 Khz en fréquence intermédiaire ou obtenu directement en sortie d'antenne.

Le deuxième module 17 est composé essentiellement par deux processeurs de signaux du type connu par exemple sous la désignation TMS320C30 commercialisé par la Société de droit des Etats-Unis d'Amérique "Texas Instrument". Un premier processeur 22 est programmé pour effectuer le filtrage numérique des voies I et Q du récepteur. Il assure également de façon connue le filtrage du canal de transmission, le contrôle de niveau en agissant sur les atténuateurs 21 et la commande numérique de la commande automatique de gain du récepteur.

Le deuxième processeur 23 est programmé selon le procédé décrit précédemment pour assurer l'égalisation et une prise de décision sur les symboles reçus sur les voies I et Q.

La station de commande 18 assure la récupération des bits démodulés afin de reconstituer les messages émis pour essentiellement procéder à leur enregistrement sur un disque par exemple ou les afficher sur un écran de visualisation ou encore les imprimer.

**Revendications**

1. Procédé d'égalisation d'un signal radioélectrique du type consistant à approcher un signal échantillonné $X_n$, par filtrage à travers un filtre numérique (1) qui est adapté au cours du temps pour rendre minimal un signal d'erreur $\varepsilon(n)$, la minimisation a lieu par mise à jour des coefficients d'une première matrice de rotation $Q_a(n)$ (3, 8) donnant une prédiction des échantillons $X_q(n + 1)$ et du signal d'erreur $e_{aq}(n + 1)$ et d'une deuxième matrice de mise à jour des rotations $Q_\alpha(n + 1)$ (5) telle que

$$\begin{bmatrix} g_{N+1}(n+1) \\ G_N(n+1) \end{bmatrix} = Q_\alpha(n+1)\begin{bmatrix} G_N(n) \\ u \end{bmatrix}$$

où u est un scalaire fonction de l'énergie $E_a(n + 1)$ du signal d'erreur $g_{N+1}(n + 1)$ est un scalaire et $G_N(n)$ est un vecteur résultant du produit de la matrice $Q_N(n)$ par le vecteur [100...0] transposé tel que
$$Q_N(n).[10...0]^T = [\gamma_N(n)...G_N(n)]^T, \gamma_N(n)$$
étant un scalaire

caractérisé en ce qu'il consiste à normaliser les échantillons du signal d'entrée par la racine carrée de son énergie $\sqrt{E_{bo}(n + 1)}$ en introduisant une rotation d'angle $\psi$ telle que :

$$\begin{bmatrix} 0 \\ \sqrt{E_{bo}(n+1)} \end{bmatrix} = \begin{bmatrix} \cos\psi(n+1) & -\sin\psi(n+1) \\ \sin\psi(n+1) & \cos\psi(n+1) \end{bmatrix}\begin{bmatrix} X(n+1) \\ \sqrt{wE_{bo}(n)} \end{bmatrix},$$

avec

$$\sin(\psi + 1) = \frac{x(n + 1)}{\sqrt{E_a(n + 1)}}$$

$$E_a(n + 1) = \cos^2 \psi(n + 1)E_a(n) + e_{aq}^2(n + 1)$$

et

$$\gamma(n)\sqrt{\frac{\cos^2 \psi(n + 1)E_a(n)}{E_a(n + 1)}} = \gamma(n + 1)$$

- à calculer $e_{aq}(n + 1)$ et $X_q(n + 1)$ par la relation

$$\begin{bmatrix} e_{aq}(n+1) \\ X_q(n+1) \end{bmatrix} = Q_a(n) \begin{bmatrix} \sin \psi(n+1) \\ \cos \psi(n+1). X_q(n) \end{bmatrix}$$

et à calculer $Q_a(n + 1)$ par la relation

$$Q_a(n + 1).[1.0]^T = [\gamma_N(n + 1), G_N(n + 1)]^T.$$

**2.** Procédé selon la revendication 1 caractérisé en ce qu'il consiste à choisir comme matrice de rotation une matrice de Givens complexe pour le traitement de signaux $X_n$ complexes.

**3.** Procédé selon les revendications 1 et 2 caractérisé en ce qu'il consiste à calculer l'énergie $E_{aN}(n)$ à chaque instant (n) par la relation

$$E_a(n) = w.E_{aN}(n - 1) + e_{aqN}(n)e_{aq_N}^*(n)$$

où $E_{aN}(n - 1)$ est l'énergie à l'instant n-1 et $e_{aq_N}^*(n)$ est le produit du nombre complexe $e_{aqN}(n)$ représentant le signal d'erreur par son conjugué

et à choisir pour u le quotient par la racine carrée de l'énergie calculée à l'instant (n+1) du produit de $\gamma(n)$ par la valeur conjuguée et $e_{aq_N}^*(n + 1)$ suivant la relation :

$$u = \frac{\gamma_N(n).e_{aq_N}^*(n + 1)}{\sqrt{Ea_N(n + 1)}}$$

**4.** Procédé selon la revendication 3 caractérisé en ce qu'il consiste à utiliser comme matrice de rotation une matrice

$$Q_0 = \begin{bmatrix} \cos\theta & -\sin\theta \\ \sin\theta^* & \cos\theta \end{bmatrix}$$

avec

$\cos\theta^2 + \sin\theta \sin\theta^* = 1$, dans laquelle $c\theta$ appartient au corps des réels et $S\theta$ au corps des complexes.

**5.** Dispositif égaliseur selon l'une quelconque des revendications 1 à 4 caractérisé en ce qu'il comprend un premier ensemble ($12_1 ... 12_N$) de N opérateurs de rotation $Q_a(n)$ pour calculer l'erreur de $e_{aq}(n + 1)$ du signal et le signal $X_q(n + 1)$ à chaque instant n+1 et un deuxième ensemble ($13_1 ... 13_N$) de N opérateurs de rotation $Q_\alpha(n)$ pour calculer chaque scalaire $g_{N+1}(n + 1)$, chaque sortie $e_{aq}i(n + 1)$ d'un opérateur de rotation $Q_ai(n)$ étant couplé respectivement à une entrée d'un opérateur de rotation $Q_\alpha i(n)$ du deuxième ensemble pour appliquer sur cette entrée un signal

$$u = \frac{\gamma i(n)}{\sqrt{Ea_i(n + 1)}}$$

**6.** Utilisation du dispositif selon la revendication 5 dans un modem de radiocommunication pour décorréler des symboles complexes transmis par un récepteur, ledit modem étant caractérisé en ce qu'il comporte un premier module (16) pour convertir les signaux analogiques fournis par le récepteur en signaux numériques, et un deuxième module (17) comportant des processeurs (22, 23) de traitement du signal pour filtrer les signaux numériques fournis par le premier module (16), au moins un des processeurs (23) étant programmé pour assurer l'égalisation des symboles complexes reçus.

FIG.1

FIG.2

FIG.3A

$Y_0(n+1) = 1$         INITIALISATION      9

$e_{aq0}(n+1) = x(n+1)$ , $e_{q0}(n+1) = y(n+1)$

---

Pour $i = 0$ à $N-1$,        Prédiction

$e_{aq(i+1)}(n+1) = \cos\theta_{i+1}(n)\, e_{aqi}(n+1) - \sqrt{w}\,\sin\theta_{i+1}(n)\, X_{q(i+1)}(n)$

$X_{q(i+1)}(n+1) = \sin\theta_{i+1}(n)\, e_{aqi}(n+1) + \sqrt{w}\,\cos\theta_{i+1}(n)\, X_{q(i+1)}(n)$

$E_{aN}(n+1) = w\, E_{aN}(n) + e_{aq}^2{}_N(n+1)$     10

Pour $i = N-1$ à $0$:

$E_{ai}(n+1) = E_{a(i+1)}(n+1) + X_q^2{}_{(i+1)}(n+1)$

$\sin\alpha_{i+1}(n+1) = \dfrac{X_{q(i+1)}(n+1)}{\sqrt{E_{ai}(n+1)}}$    , $\cos\alpha_{i+1}(n+1) = \sqrt{1 - \sin^2\alpha_{i+1}(n+1)}$

$u = Y_N(n)\, \dfrac{e_{aqN}(n+1)}{\sqrt{E_{aN}(n+1)}}$

Pour $i = N-1$ à $0$:

$g_{i+2}(n+1) = \cos\alpha_{i+1}(n+1)\, g_{i+1}(n) - u\,\sin\alpha_{i+1}(n+1)$

$u = \sin\alpha_{i+1}(n+1)\, g_{i+1}(n) + u\,\cos\alpha_{i+1}(n+1)$

$g_1(n+1) = u$

Pour $i = 0$ à $N-1$:

$\sin\theta_{i+1}(n+1) = \dfrac{g_{i+1}(n+1)}{Y_i(n+1)}$    , $\cos\theta_{i+1}(n+1) = \sqrt{1 - \sin^2\theta_{i+1}(n+1)}$

$Y_{i+1}(n+1) = Y_i(n+1)\,\cos\theta_{i+1}(n+1)$

---

Pour $i = 0$ à $N-1$:       Filtrage     11

$e_{q(i+1)}(n+1) = \cos\theta_{i+1}(n+1)\, e_{qi}(n+1) - \sqrt{w}\,\sin\theta_{i+1}(n+1)\, Y_{q(i+1)}(n)$

$Y_{q(i+1)}(n+1) = \sin\theta_{i+1}(n+1)\, e_{qi}(n+1) + \sqrt{w}\,\cos\theta_{i+1}(n+1)\, Y_{q(i+1)}(n)$

$\varepsilon_{(i+1)}(n+1) = Y_{(i+1)}(n+1)\, e_{q(i+1)}(n+1)$

# FIG.3B

15

FIG. 4

FIG.5

NORMALISATION

| Relations | Obtenus |
|---|---|
| $\begin{bmatrix} 0 \\ \sqrt{Eb_0(n+1)} \end{bmatrix} = \begin{bmatrix} \cos\Psi(n+1) & -\sin\Psi(n+1) \\ \sin\Psi(n+1) & \cos\Psi(n+1) \end{bmatrix} \begin{bmatrix} x(n+1) \\ \sqrt{wEb_0(n)} \end{bmatrix}$ | $\sin\Psi(n+1), \cos\Psi(n+1)$ <br> $\sqrt{Eb_0(n+1)}$ |

PREDICTION

| | |
|---|---|
| $\begin{bmatrix} e_{aq}(n+1) \\ X_q(n+1) \end{bmatrix} = Q_a(n) \begin{bmatrix} \sin\Psi(n+1) \\ \cos\Psi(n+1) X_q(n) \end{bmatrix}$ | $e_{aq}(n+1)$ <br> $X_q(n+1)$ |
| $Q^{-1}_\alpha(n+1) \begin{bmatrix} 0 \\ 1 \end{bmatrix} = \begin{bmatrix} X_q(n+1) \\ \sqrt{E_a(n+1)} \end{bmatrix}$ | $Q_\alpha(n+1)$ |
| $Q_\alpha(n+1) \begin{bmatrix} G_N(n) \\ u \end{bmatrix} = \begin{bmatrix} g_{N+1}(n+1) \\ G_N(n+1) \end{bmatrix}$ | $G_N(n+1)$ |
| $Q_a(n+1) \begin{bmatrix} 1 \\ 0 \end{bmatrix} = \begin{bmatrix} \gamma_N(n+1) \\ G_N(n+1) \end{bmatrix}$ | $Q_a(n+1)$ <br> $\gamma_N(n+1)$ |

FILTRAGE

| | |
|---|---|
| $\begin{bmatrix} e_q(n+1) \\ Y_q(n+1) \end{bmatrix} = Q_a(n+1) \begin{bmatrix} y(n+1) \\ \sqrt{w} Y_q(n) \end{bmatrix}$ | $e_q(n+1)$ <br> $Y_q(n+1)$ |
| $\varepsilon(n+1) = \gamma_N(n+1) e_q(n+1)$ | $\varepsilon(n+1)$ |

## FIG.6A

$$E_{b0}(n+1) = w E_{b0}(n) + x^2(n+1)$$

$$\sin \Psi(n+1) = \frac{x(n+1)}{\sqrt{E_{b0}(n+1)}} \qquad \cos \Psi(n+1) = \sqrt{\frac{w E_{b0}(n)}{E_{b0}(n+1)}}$$

$$e_{aq0}(n+1) = \sin \Psi(n+1), \; g_1(n+1) = \sin \Psi(n+1), \; e_{q0}(n+1) = y(n+1)$$

---

Pour $i = 0, N-1$.        Prédiction

$$e_{aq(i+1)}(n+1) = \cos \theta_{i+1}(n) \, e_{aqi}(n+1) - \cos \Psi(n+1) \sin \theta_{i+1}(n) \, X_{q(i+1)}(n) \quad (4)$$

$$X_{q(i+1)}(n+1) = \sin \theta_{i+1}(n) \, e_{aqi}(n+1) + \cos \Psi(n+1) \cos \theta_{i+1}(n) \, X_{q(i+1)}(n) \quad (5)$$

$$\sin \alpha_{i+1}(n+1) = \frac{X_{q(i+1)}(n+1)}{\sqrt{E_{ai}(n+1)}} \quad , \quad \cos \alpha_{i+1}(n+1) = \sqrt{1 - \sin^2 \alpha_{i+1}(n+1)}$$

$$\sqrt{E_{a(i+1)}(n+1)} = \cos \alpha_{i+1}(n+1) \sqrt{E_{ai}(n+1)}$$

$$g_{i+2}(n+1) = \cos \alpha_{i+1}(n+1) \, g_{i+1}(n) - \gamma_{i+1}(n) \frac{e_{aq(i+1)}(n+1)}{\sqrt{E_{a(i+1)}(n+1)}} \sin \alpha_{i+1}(n+1) \quad (6)$$

$$\sin \theta_{i+1}(n+1) = \frac{g_{i+1}(n+1)}{\gamma_i(n+1)} \quad , \quad \cos \theta_{i+1}(n+1) = \sqrt{1 - \sin^2 \theta_{i+1}(n+1)}$$

$$\gamma_{i+1}(n+1) = \gamma_i(n+1) \cos \theta_{i+1}(n+1)$$

---

Pour $I = 0$ à $N-1$.        Filtrage

$$e_{q(i+1)}(n+1) = \cos \theta_{i+1}(n+1) \, e_{qi}(n+1) - \sqrt{w} \sin \theta_{i+1}(n+1) \, Y_{q(i+1)}(n) \quad (7)$$

$$Y_{q(i+1)}(n+1) = \sin \theta_{i+1}(n+1) \, e_{qi}(n+1) + \sqrt{w} \cos \theta_{i+1}(n+1) \, Y_{q(i+1)}(n) \quad (8)$$

$$\varepsilon_{(i+1)}(n+1) = \gamma_{(i+1)}(n+1) \, e_{q(i+1)}(n+1)$$

## FIG. 6B

FIG.7

**FIG. 8**

$$\sqrt{E_{b0}(n+1)} = \sqrt{(\sqrt{w} \sqrt{E_{b0}(n)})^2 + x(n+1)^2}$$

$$\Psi(n+1) = \text{arctg}\left(\frac{x(n+1)}{\sqrt{w} \sqrt{E_{b0}(n)}}\right)$$

$$e_{aq0}(n+1) = \sin\Psi(n+1), \quad g_1(n+1) = \sin\Psi(n+1), \quad e_{q0}(n+1) = y(n+1)$$

---

Pour $i = 0, N-1$: \hfill Prédiction

$$e_{aq(i+1)}(n+1) = \cos\theta_{i+1}(n) e_{aqi}(n+1) - \cos\Psi(n+1)\sin\theta_{i+1}(n) X_{q(i+1)}(n)$$

$$X_{q(i+1)}(n+1) = \sin\theta_{i+1}(n) e_{aqi}(n+1) + \cos\Psi(n+1)\cos\theta_{i+1}(n) X_{q(i+1)}(n)$$

$$\sqrt{E_{a(i+1)}(n+1)} = \sqrt{(\sqrt{E_{ai}(n+1)})^2 - (X_{q(i+1)}(n+1))^2}$$

$$\alpha_{i+1}(n+1) = \text{arctg}\left(\frac{X_{q(i+1)}(n+1)}{\sqrt{E_{a(i+1)}(n+1)}}\right)$$

$$g_{i+2}(n+1) = \cos\alpha_{i+1}(n+1), \ g_{i+1}(n) - \gamma_{i+1}(n)\frac{e_{aq(i+1)}(n+1)}{\sqrt{E_{a(i+1)}(n+1)}}\sin\alpha_{i+1}(n+1)$$

$$\gamma_{i+1}(n+1) = \sqrt{\gamma_i(n+1)^2 - g_{i+1}(n+1)^2}$$

$$\theta_{i+1}(n+1) = \text{artg}\left(\frac{g_{i+1}(n+1)}{\gamma_{i+1}(n+1)}\right)$$

---

Pour $i = 0$ à $N-1$: \hfill Filtrage

$$e_{q(i+1)}(n+1) = \cos\theta_{i+1}(n+1) e_{qi}(n+1) - \sqrt{w} \sin\theta_{i+1}(n+1) Y_{q(i+1)}(n)$$

$$Y_{q(i+1)}(n+1) = \sin\theta_{i+1}(n+1) e_{qi}(n+1) + \sqrt{w} \cos\theta_{i+1}(n+1) Y_{q(i+1)}(n)$$

$$\varepsilon_{(i+1)}(n+1) = Y_{(i+1)}(n+1) e_{q(i+1)}(n+1)$$

# FIG.9

**FIG.10**

**FIG.11**

EP 0 614 288 A1

Office européen
des brevets

**RAPPORT DE RECHERCHE EUROPEENNE**

Numero de la demande
EP 94 40 0469

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.5) |
|---|---|---|---|
| A | SIGNAL PROCESSING. EUROPEAN JOURNAL DEVOTED TO THE METHODS AND APPLICATIONS OF SIGNAL PROCESSING, vol.17, no.4, Août 1989, AMSTERDAM NL pages 291 - 304, XP46219 M.G.BELLANGER 'THE FLS-QR ALGORITHM FOR ADAPTIVE FILTERING' * page 291, ligne 1 - page 301, ligne 20 * * tableau 1 * | 1,5,6 | H04B7/005 |
| D,A | IEEE TRANSACTIONS ON SIGNAL PROCESSING, vol.39, no.7, Juillet 1991, NEW YORK US pages 1541 - 1551 F.LING 'GIVENS ROTATION BASED LEAST SQUARES LATTICE AND RELATED ALGORITHMS' * page 1541, colonne de gauche, ligne 1 - page 1542, colonne de droite, ligne 36 * * page 1548, colonne de droite, ligne 18 - ligne 33 * * page 1550, colonne de gauche, ligne 13 - ligne 16 * | 1,2,5,6 | |

DOMAINES TECHNIQUES RECHERCHES (Int.Cl.5)

H04B

Le présent rapport a été établi pour toutes les revendications

| Lieu de la recherche | Date d'achèvement de la recherche | Examinateur |
|---|---|---|
| LA HAYE | 13 Juin 1994 | Lydon, M |